# EUROPEAN PATENT SPECIFICATION

(11) **EP 1 536 723 B1**
(45) Date of publication and mention of the grant of the patent: **22.09.2010**
(21) Application number: 03791078.3
(22) Date of filing: 24.07.2003
(51) Int. Cl.: A47J 37/12

(54) **DEEP FAT FRYER WITH IMPROVED TEMPERATURE CONTROL**
FRITEUSE MIT VERBESSERTER TEMPERATURSTEUERUNG
FRITEUSE A REGULATION DE TEMPERATURE AMELIOREE

(30) Priority: 29.08.2002 EP 02078556
(43) Date of publication of application: 08.06.2005
(73) Proprietor: Koninklijke Philips Electronics N.V., 5621 BA Eindhoven (NL)
(72) Inventor: KOOYKER, Klaas, NL-5656 AA Eindhoven (NL); BRON, Andries, NL-5656 AA Eindhoven (NL); KATS, Mindert, NL-5656 AA Eindhoven (NL); EHLHARDT, Huub, NL-5656 AA Eindhoven (NL)
(74) Representative: Damen, Daniel Martijn
(86) International application number: PCT/IB2003/003327
(87) International publication number: WO 2004/019743

(56) References cited:
- US-A- 4 574 185
- US-A- 5 379 683
- US-A- 5 490 449

## Description

### BACKGROUND OF THE INVENTION

The present invention relates to a deep fat fryer according to the introductory portion of claim 1.

Such a deep fat fryer is known from U.S. Pat. No. 4,574,185.

In thermostatically controlled deep fat fryers, the temperature of the fat sinks for a substantial period of time after a batch of food has been lowered therein. This period of time varies substantially as does the required cooking time for a given quantity of a given food. The thermostatic temperature control will respond to the temperature drop and activate the heating element. However, there is a lag between the time when the food is lowered in the fat causing an immediate temperature drop and the time when the thermostat calls for heat. Subsequently, it also takes some time before the temperature gradient associated to the maximum heat flow from the element to the fat is established. The time lag between the temperature drop and the establishment of the maximum heat flow is normally 45 seconds or more.

The temperature drop has an adverse effect on the fried food quality. The longer the duration of the temperature drop, the more fat is absorbed by the food and the more water is lost from the food.

Another problem of deep fat fryers is that degeneration of the cooking medium is accelerated and energy consumption is increased due to overshoot in the temperature of the cooking medium, which occurs in use.

In U.S. Pat. No. 3,894,483, it is described to overcome the thermostat time reaction lag by initiating burner operation before or as the food is lowered into the cooking medium by either combining a bypass reset timer with a well-known adjustable frying cycle timer or manual start switch, or by tying in the bypass reset and cycle timers with an automatic lowering basket lift, such as that disclosed in U.S. Pat. No. 3,273,488. However, the activation of the heater results in a temperature overshoot if the food to be fried is lowered into the cooking medium too late or if no food has been loaded into the basket. Conversely, if the food is lowered into the cooking medium at the same time as heater operation is initiated or very briefly thereafter, heat flow to the cooking medium may still be building up after the temperature of the cooking medium has dropped or the temperature of the cooking medium, which varies in accordance with the thermostatically controlled activation and deactivation of the heater, may be relatively low at the time of lowering of the food.

Also in U.S. Pat. No. 5,596,514 it is described to provide an "instant-on" feature that causes the heating element to be turned on immediately, regardless of the cooking medium temperature. This feature is activated once a product key is depressed to initiate the cook mode. After a period of 15 seconds, a controller evaluates whether the temperature has gone up or fallen. If the temperature has gone up, the heating element is turned off. If the temperature has fallen, the heating element remains on. Also this solution entails that the activation of the heater can easily result in a temperature overshoot if the food to be fried is lowered into the cooking medium too late (depending on the temperature and the heating condition when the product key is depressed) or if no food is lowered into the cooking medium at all. The food can also be lowered into the cooking medium too early, i.e. before the heat flow to the fat is fully established and/or while the temperature is near the low end of the temperature range maintained by the thermostatic heater control.

### SUMMARY OF THE INVENTION

It is an object of this invention to overcome the reaction lag between the temperature drop associated with the lowering of food in the cooking medium and the establishment of the maximum heat flow from the heater to the cooking medium while avoiding or at least reducing the risk of temperature overshoot due to food not being lowered into the cooking medium in good time.

It is another object of this invention to save on the amount of energy required in a given cooking operation.

These objects are achieved by providing a deep fat fryer according to claim 1. The generation of a human perceptible signal representing a warning that the food is to be loaded into the basket, prior to the food lowering command signal commanding the lowering of food into the cooking medium, supports optimal timing of the lowering of the food into the cooking medium, so that the temperature drop is minimized while the risk of temperature overshoot is avoided or at least reduced.

Particular embodiments of the invention are set forth in the dependent claims.

Other objects, features and effects as well as details of this invention appear from the detailed description of a preferred form of the invention.

### BRIEF DESCRIPTION OF THE DRAWINGS

Fig. 1 is a schematic representation in side view of a deep fat fryer according to the present invention;
Fig. 2 is a graph of temperature over time of a first example of operation of a deep fat fryer according to the present invention; and
Fig. 3 is a graph of temperature over time of a second example of operation of a deep fat fryer according to the present invention.

### DETAILED DESCRIPTION

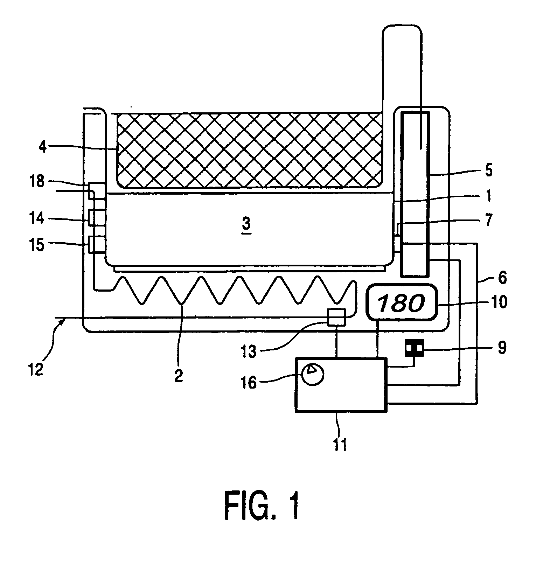

In Fig. 1 an example of a deep fat fryer according to the invention is shown which includes a removable frying pan 1 and a heating element 2 for heating a cooking medium 3 (usually frying fat) in the frying pan 1. To lower food into the cooking medium 3 and to lift food out of the cooking medium 3 a basket 4 and an automated basket lift 5 are provided.

A temperature sensor circuit 6 is provided for sensing the temperature of the cooking medium 3 in the frying pan 1 and for generating a temperature signal representing the sensed temperature in the frying pan 1. The temperature sensor circuit 6 includes a negative temperature coefficient probe 7 as is well known in the art.

A sound generator 9 in the form of a buzzer connected to the control system 11 is provided. The control system 11 is adapted for outputting a food lowering command signal to the buzzer 9, which causes the buzzer 9 to generate an audible food lowering command signal warning the user that the food should be lowered into the basket 4 in preparation of the lowering into the fat 3. Alternatively, or additionally, also other sound generators, such as beepers and loudspeakers connected to circuitry for generating signals driving the loudspeaker can be provided. Furthermore, the fryer is equipped with a display 10 that may be used to show optical command signals and other information, such as the temperature setting. The control system 11 is further adapted for generating further food lowering command signals, controlling the automated basket lift 5 to further lower the food into the fat 3.

The heating element 2 is included in a heating circuit 12 which includes a heating element control switch 13 for switching the heating element 2 on and off to control of the temperature of the cooking medium 3 by activating and deactivating the heater 2. The heating circuit 12 further includes a number of safety features in the form of a pan presence sensor 18, a thermostatic switch 14 that opens in response to a temperature exceeding the maximum allowable frying temperature and automatically closes when the temperature is lowered again to a level under the maximum allowable frying temperature and a safety fuse 15 adapted to open in response to a highest safe temperature above the maximum allowable frying temperature.

The temperature sensor circuit 6 and the control switch 13 are operatively connected to the electronic control system 11, which is adapted for thermostatically controlling the switch 13 for activating the heating element 2 in response to a temperature signal from the temperature sensor circuit 6 representing a sensed temperature at or below a lower limit value and deactivating the heating element 2 in response to a temperature signal from the temperature sensor circuit 6 representing a sensed temperature at or above an upper limit value.

Thus, the control system 11 generates a food lowering command signal commanding the lowering of food into the basket 4 in preparation of the lowering of food into the cooking medium 3 and for generating a food lowering command signal causing the basket 4 carrying the food to be lowered into the fat 3 in response to at least one temperature signal that represents a given sensed temperature below the upper limit value to which the control system 11 is set. The control system 11 is further adapted to only generate food lowering command signals if the heating element 2 is active.

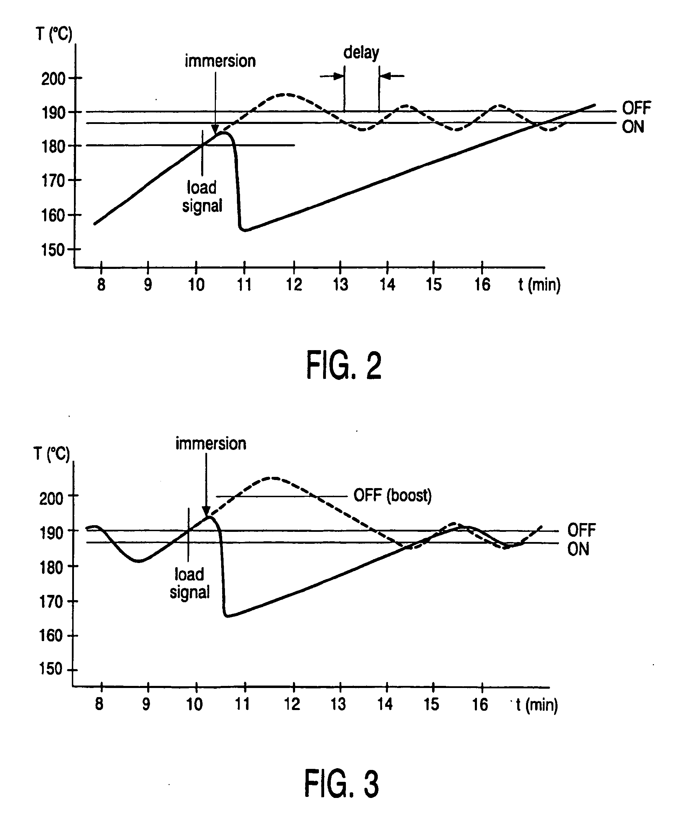

A first example of the operation of the described fryer is described with reference to the graph shown in Fig. 2. The continuous line in the graph in Fig. 2 represents the cooking medium temperature over time after the fryer is switched on and if food is immersed into the cooking medium after approximately 10 min 30 s. The food immersion may be completely or partially. The interrupted line shows the cooking medium temperature over time if no food is immersed into the cooking medium 3.

First, the temperature rises while the heating element 2 is active. In the present example, the control system 11 is set via a user interface 16 in the form of a control knob to a set point temperature (upper limit value) of 190 °C at which the heating element 2 is turned off. In this example, the associated turn-on temperature (lower limit value) at and below which the heating element 2 is switched on is 186 °C. A first food lowering command signal - in the graph designated as "load signal" - is generated in response to a first occurrence after switching on of the fryer or after warming up of the cooking medium 3 from a temperature below the frying range (for instance from a temperature of 100 °C or lower) of a temperature signal representing a sensed temperature 10 °C below the pre-set upper limit value (in this example 190 °C) at which the heater 2 is switched off during frying at the selected temperature setting. This "load signal" warns the user that - if not already loaded into the basket 4 - food should be placed in the basket 4 in preparation of the imminent lowering of the basket 4 into the cooking medium 3.

A second food lowering command signal - in the graph designated as "immersion" - is generated in response to a first occurrence after switching on of the fryer or after warming up of the cooking medium 3 from a temperature below the frying range (for instance from a temperature of 100 °C or lower) of a temperature signal representing a sensed temperature 5 °C below the upper limit value of a pre-set temperature (in this example 190 °C) at which the heater 2 is switched off during frying at the selected temperature setting. This "immersion" signal causes the basket lift 5 to lower the basket 4 carrying the food into the cooking medium 3.

Then, according to this example, at t = 10 min 30 s, the immersion of the food into the cooking medium 3 causes the temperature of the cooking medium 3 to drop to approximately 155 °C. Because the heat flow from the heating element 2 to the cooking medium 3 is already fully established, after the temperature drop, the temperature of the cooking medium 3 virtually immediately starts to rise back to the pre-set temperature, without the normal delay between passage of the switch-on temperature and establishment of the full heat flow. In Fig. 2, the duration of this normal delay between passage of the switch-on temperature and establishment of the full heat flow is in the idle situation represented by the interrupted line appears from the time span designated as "delay".

Because the signals to load the basket 4 and to lower the basket 4 are given in response to temperature signals representing a sensed temperature lower than the maximum temperature at which the heater is active at the selected temperature setting, the risk of temperature overshoot is reduced, while it is at the same time ensured that the heat flow from the heater 2 to the cooking medium 3 is not interrupted before the temperature drop and needs to be built up again while and after the temperature drop has occurred. Furthermore, it is ensured that the temperature of the cooking medium 3 is not far below the upper limit value when the food is lowered into the cooking medium 3.

The control system 11 is adapted to cause to generate the signal to load the basket 4 and to generate the signal to lower the basket 4 in response to temperature signals representing sensed temperatures below the pre-set temperature only upon the first occurrence of the respective temperature signals. Thus, it is avoided that the signals to lower food into the basket 4 and to lower the basket 4 are repeated when the temperatures of 180 °C and 185 °C are reached again while the food is being fried. This can for instance be achieved by deactivating the generations of the basket lowering command signals in response to these sensed temperatures 120 seconds after the respective signals have been generated.

Because the temperature of the cooking medium 3 rises quickly after the drop associated with the immersion of the food to be cooked, the amount of fat absorbed in the food is kept relatively low, drying out of the food is limited and the formation of excessive crust thickness is avoided. Because the frying time is not prolonged due to the thermostatic response time, food can be cooked in small portions without each time having to go through the thermostatic response time. Cooking in smaller portions further reduces the temperature drop and further reduces the time required to reach the upper limit value of the temperature of the cooking medium 3 after the temperature drop. Accordingly, the quality of the food can be further improved by cooking in small portions without requiring much more time.

It is observed that the temperatures described in the present example can also be chosen differently. Also, the differences between the upper limit value of the sensed temperature and the predetermined sensed temperatures in response to which the food lowering command signals are given need not be fixed. It is for instance possible to determine the temperature in response to which a food lowering command signal is given from the steepness of the temperature rise over time and the desired time between the signal and the moment when the upper limit value of the sensed temperature would be reached if no food is lowered into the cooking medium. Then, the food lowering command signal can be given a predetermined (and optionally adjustable) amount of time before the pre-set upper limit value of the temperature would be reached independently of the steepness of the temperature rise during heating of the cooking medium.

In Fig. 3, a second example of operation of the described deep fat fryer is shown. According to this example, the user interface 16 has been operated briefly after t = 9 min to bring the control system 11 in a boost condition controlling the heater 2 to be active to a temporarily increased upper limit value of the cooking medium temperature (in this example 200 °C) above the pre-set upper limit value of the sensed temperature (in this example 190 °C).

Approximately at t = 10 min, the control system 11 generates the "load signal" activating the buzzer 9 in response to a sensed temperature 10 °C below the temporarily increased upper limit value of the cooking medium temperature at which the heating element 2 is or would be deactivated if no food is lowered into the cooking medium. Approximately at t = 10 min 45 s, the food immersion command signal causing the basket 4 to be lowered is generated in response to a temperature signal representing a sensed temperature 4 °C below the temporarily increased maximum temperature at which the heater 2 is active when the control system 11 is in boost condition at the selected temperature setting. As in the previous example, it is ensured that the heat flow from the heating element 2 to the cooking medium 3 is already fully established and not switched off again when the food is immersed (partially or completely) in the cooking medium 3. Accordingly, after the temperature drop, the temperature virtually immediately starts to rise back to the pre-set temperature, without a delay due to the response time of the thermostat and the time required to establish the temperature gradient associated to the maximum heat flow from the heater 2 to the cooking medium 3.

Again, the food lowering command signals warning the user to load food into the basket 4 and controlling the lift 5 to lower the basket 4 are given before the heater deactivation temperature that is in force has been reached, so that the risk of temperature overshoot is reduced.

It is observed that the temporary temperature increase caused by the temporarily increased upper limit value at which the heater is deactivated may indeed cause a slightly accelerated degradation of the cooking medium. However, this effect is small, especially if, as is intended, food is lowered into the cooking medium before the temporarily increased upper limit value of the cooking medium temperature is reached. Furthermore, a higher cooking medium temperature at the time food is lowered into the cooking medium results in a quicker heat transfer to the food. This in turn results in a reduced fat absorption and a shorter cooking time.

The temporary increase of the upper limit value of the cooking medium temperature at which the heater 2 is deactivated further allows to ensure that the heater 2 is activated for a sufficiently long period of time to establish full heat flow from the heater 2 to the cooking medium 3 even if the cooking medium temperature is at its maximum within the range associated to the selected temperature setting when the boost condition is activated. To reliably achieve this effect, the temporary increase of the upper limit value is preferably at least 5 to 10 °C.

In fryers which are not equipped with an automatic basket lift or which are not equipped with a powered basket lift at all so that the basket must be lowered and lifted manually, the food lowering command signal may for instance consist of a first human perceptible signal warning that the basket should be loaded and a second human perceptible signal indicating that the basket should be lowered.

The increased upper limit value of the temperature at which the heater 2 is deactivated when the control system 11 is in boost condition can be determined as a separate limit value for the signal representing the sensed temperature. However, it is also possible to determine that temperature indirectly by setting a predetermined maximum duration of the boost condition which, taking into account the power of the heater 2 and the thermal capacity of the cooking medium 3 and the pan 1, provides a predetermined approximate temperature rise if no food is lowered into the cooking medium. This provides the advantage that a single control parameter is sufficient to limit both the maximum temperature in the boost condition and the duration of the boost condition. Furthermore, the duration of activation of the heater 2 is ensured independently of the current cooking medium temperature at the time the boost condition is initiated.

If the maximum temperature of the boost condition is controlled by setting a temporarily increased limit value for the signal representing the sensed temperature at which the heater 2 is deactivated, this increased limit value is preferably determined by adding a predetermined increase to the pre-set upper limit value of the sensed temperature applicable during frying. The maximum temperature achievable in the boost condition is then closely related to the pre-set frying temperature. The duration of the boost condition can then be limited in a simple manner by ending the boost condition in response to a temperature signal representing that increased upper limit value or in response to the expiry of a predetermined time-interval after initiation of the boost condition. Unnecessary repetition of the food lowering command signals after the food has been lowered into the cooking medium can be avoided by adapting the control system 11 to generate food lowering command signals in response to predetermined temperature signals associated with the boost condition only if the control system 11 is in boost condition. In addition, the control system 11 is preferably adapted to end the boost condition early enough to avoid that the normal upper limit value of the cooking medium associated to the temperature setting that is in force is reached again after the temperature drop caused by the lowering of the food into the cooking medium before the boost condition has ended.

In order to avoid unnecessary repetition of the food lowering command signal or signals, it can be provided that the temperatures in response to which these signals are generated by the control system 11 are not reached when the control system 11 is not in boost condition and before the boost condition has ended after lowering of the food into the cooking medium 3. Alternatively, for the same purpose, it can be provided that the food lowering command signal or signals are generated by the control system 11 in response to temperatures or a temperature associated to the boost condition only if the control system 11 is in boost condition and that the boost condition is ended early enough to prevent that, after lowering of the food into the cooking medium 3, the temperatures or temperature in response to which the food lowering command signals are generated if the control system is in the boost condition are reached again before the boost condition has been ended. Yet another alternative solution to prevent unwanted repetition of food lowering command signals is to adapt the control system 11 to generate the food lowering command signal or signals only once in response to the predetermined temperature or respective temperatures after each activation of the boost condition. The food lowering command signal or signals may each include a plurality of successive stimuli, such as sounds or light signals.

## Claims

1. A deep fat fryer including:
a frying pan (1);
a basket (4);
a heating element (2) for heating a cooking medium (3) in the frying pan (1);
a temperature sensor circuit (6) for sensing the temperature of the cooking medium (3) in the frying pan (1) and generating a temperature signal representing the sensed temperature in the frying pan (1);
a heater control (13) for activating and deactivating the heating element (2);
and
a control system (11) operatively connected to the temperature sensor circuit (6) and to the heater control (13);
at least one signal generator (9, 10) for generating a human perceptible signal;
the control system being adapted for
- thermostatically activating the heating element (2) in response to a temperature signal from the temperature sensor circuit (6) representing a sensed temperature at or below a lower limit value,
- thermostatically deactivating the heating element (2) in response to a temperature signal from the temperature sensor circuit (6) representing a sensed temperature at or above an upper limit value; and for
- generating an immersion signal commanding the lowering into the cooking medium (3) of the basket (4) containing food to be fried in response to a temperature signal from the temperature sensor circuit (6) representing a predetermined sensed temperature below said upper limit value, on condition that the heating element (2) is active,
**characterized in that**, the control system (11) is further adapted
- for generating a load signal for warning the user that, if not already loaded into the basket (4), food should be placed in the basked (4) in preparation of the imminent lowering of the basket (4) into the cooking medium (3), said load signal causing the at least one signal generator (9, 10) to generate a human perceptible signal before the generation of said immersion signal, and
- for carrying out the generation of the immersion signal before deactivation of the heating element subsequent to the load signal.

2. A deep fat fryer according to claim 1, wherein the control system (11) is adapted for generating the load signal, causing the at least one signal generator (9,10) to generate a human perceptible signal, in response to a first occurrence of the temperature signal from the temperature sensor circuit representing a predetermined sensed temperature below said upper limit value after switching on of the fryer or after heating up the cooking medium (3) from a temperature below a lowest possible frying temperature.

3. A deep fat fryer according to claim 1 or 2, further including a user interface (16) operatively connected to the control system (11) for setting a boost condition in which boost condition said upper limit value of the sensed temperature and said predetermined sensed temperature below said upper limit value are temporarily increased.

4. A deep fat fryer according to claim 3, wherein said control system (11) is adapted for determining said temporarily increased upper value of the sensed temperature by adding a predetermined increase to said upper limit value of the sensed temperature.

5. A deep fat fryer according to claim 4, wherein the control system (11) is adapted for ending the boost condition in response to a temperature signal representing said increased upper limit value.

6. A deep fat fryer according to any one of the claims 3-5, wherein the control system (11) is adapted for ending the boost condition in response to expiry of a predetermined period of time after the start of the boost condition.

7. A deep fat fryer according to any one of the preceding claims, wherein the at least one signal generator (9, 10) is adapted for generating a human perceptible signal in response to the immersion signal from the control system.

8. A deep fat fryer according to claims 1-6, further including a basket lift (5) for lowering the basket (4) into the cooking medium (3) in the frying pan (1) and lifting the basket (4) out of the cooking medium (3), and adapted to lower the basket (4) into the cooking medium (3) in response to the immersion signal.

## Patentansprüche

1. Fritteuse mit:
einer Frittierpfanne (1);
einem Korb (4);
einem Heizelement (2) zum Erhitzen eines Kochmediums (3) in der Frittierpfanne (1);
einer Temperatursensorschaltung (6) zum Messen der Temperatur des Kochmediums (3) in der Frittierpfanne (1) und Erzeugen eines die gemessene Temperatur in der Frittierpfanne (1) darstellenden Temperatursignals;
einer Heizungssteuerung (13) zum Aktivieren und Deaktivieren des Heizelements (2); sowie
einem Steuersystem (11), welches mit der Temperatursensorschaltung (6) und mit der Heizungssteuerung (13) in Wirkverbindung steht;
mindestens einem Signalgenerator (9, 10) zur Erzeugung eines für Menschen wahrnehmbaren Signals;
wobei das Steuersystem so eingerichtet ist, dass es
- das Heizelement (2) in Reaktion auf ein Temperatursignal von der Temperatursensorschaltung (6), welches eine gemessene Temperatur auf einem unteren Grenzwert oder unterhalb eines solchen darstellt, thermostatisch aktiviert;
- das Heizelement (2) in Reaktion auf ein Temperatursignal von der Temperatursensorschaltung (6), welches eine gemessene Temperatur auf einem oberen Grenzwert oder oberhalb eines solchen darstellt, thermostatisch deaktiviert; und
- ein Immersionssignal erzeugt, welches, unter der Bedingung, dass das Heizelement (2) aktiv ist, in Reaktion auf ein Temperatursignal von der Temperatursensorschaltung (6), das eine vorgegebene, gemessene Temperatur unterhalb des oberen Grenzwertes darstellt, das Herablassen des die zu frittierenden Nahrungsmittel enthaltenden Korbes (4) in das Kochmedium (3) anordnet,
**dadurch gekennzeichnet, dass** das Steuersystem (11) weiterhin so eingerichtet ist, dass es
- ein Load-Signal erzeugt, um dem Benutzer nahezulegen, in Vorbereitung des unmittelbar bevorstehenden Herablassens des Korbes (4) in das Kochmedium (3) die Nahrungsmittel in den Korb (4) zu legen, sofern dieses noch nicht geschehen ist, wobei das Load-Signal bewirkt, dass der mindestens eine Signalgenerator (9, 10) vor Erzeugen des Immersionssignals ein für den Menschen wahrnehmbares Signal erzeugt, und
- die Erzeugung des Immersionssignals vor Deaktivieren des Heizelements, auf das Load-Signal folgend, vornimmt.

2. Fritteuse nach Anspruch 1, wobei das Steuersystem (11) so eingerichtet ist, dass es das Load-Signal erzeugt, wodurch bewirkt wird, das der mindestens eine Signalgenerator (9, 10) in Reaktion auf ein erstes Auftreten des eine vorgegebene, gemessene Temperatur unterhalb des oberen Grenzwertes darstellenden Temperatursignals von der Temperatursensorschaltung nach Einschalten der Fritteuse oder nach Erhitzen des Kochmediums (3) von einer Temperatur unterhalb einer niedrigstmöglichen Frittiertemperatur ein für den Menschen wahrnehmbares Signal erzeugt.

3. Fritteuse nach Anspruch 1 oder 2, die weiterhin eine mit dem Steuersystem (11) in Wirkverbindung stehende Benutzerschnittstelle enthält, um einen Boost-Zustand einzustellen, in dem der obere Grenzwert der gemessenen Temperatur und die vorgegebene, gemessene Temperatur unterhalb des oberen Grenzwertes vorübergehend erhöht werden.

4. Fritteuse nach Anspruch 3, wobei das Steuersystem (11) so eingerichtet ist, dass es den vorübergehend erhöhten, oberen Wert der gemessenen Temperatur durch Hinzufügen einer vorgegebenen Erhöhung zu dem oberen Grenzwert der gemessenen Temperatur ermittelt.

5. Fritteuse nach Anspruch 4, wobei das Steuersystem (11) so eingerichtet ist, dass es den Boost-Zustand in Reaktion auf ein den erhöhten, oberen Grenzwert darstellendes Temperatursignal beendet.

6. Fritteuse nach einem der Ansprüche 3-5, wobei das Steuersystem (11) so eingerichtet ist, dass es den Boost-Zustand in Reaktion auf das Verstreichen eines vorgegebenen Zeitraumes nach Beginn des Boost-Zustands beendet.

7. Fritteuse nach einem der vorangegangenen Ansprüche, wobei der mindestens eine Signalgenerator (9, 10) so eingerichtet ist, dass er in Reaktion auf das Immersionssignal von dem Steuersystem ein für den Menschen wahrnehmbares Signal erzeugt.

8. Fritteuse nach einem der Ansprüche 1-6, die weiterhin einen Korb-Lift (5) enthält, um den Korb (4) in das Kochmedium (3) in der Frittierpfanne (1) herabzulassen und den Korb (4) aus dem Kochmedium (3) herauszuheben, und so eingerichtet ist, dass sie den Korb (4) in Reaktion auf das Immersionssignal in das Kochmedium (3) herablässt.

## Revendications

1. Friteuse, comprenant :
un bac de friture (1) ;
un panier (4) ;
un élément de chauffage (2) pour chauffer un milieu de cuisson (3) dans le bac de friture (1) ;
un circuit de capteur de température (6) pour capter la température du milieu de cuisson (3) dans le bac de friture (1) et générer un signal de température représentant la température détectée dans le bac de friture (1) ;
une commande de dispositif de chauffage (13) pour activer et désactiver l'élément de chauffage (2) ; et
un système de commande (11) raccordé opérationnellement au circuit de capteur de température (6) et à la commande du dispositif de chauffage (13) ;
au moins un générateur de signal (9, 10) pour générer un signal perceptible par les êtres humains ;
le système de commande étant adapté pour :
- activer de manière thermostatique l'élément de chauffage (2) en réponse à un signal de température provenant du circuit du capteur de température (6) représentant une température détectée à une valeur limite inférieure ou en dessous de celle-ci ;
- désactiver de manière thermostatique l'élément de chauffage (2) en réponse à un signal de température provenant du circuit du capteur de température (6) représentant une température détectée à une valeur limite inférieure ou en dessous de celle-ci ; et pour
- générer un signal d'immersion commandant l'abaissement dans le milieu de cuisson (3) du panier (4) contenant les aliments devant être frits en réponse à un signal de température provenant du circuit du capteur de température (6) représentant une température détectée prédéterminée en dessous de ladite valeur limite supérieure, à condition que l'élément de chauffage (2) soit actif ;
**caractérisé en ce que** le système de commande (11) est également adapté :
- pour générer un signal de charge pour avertir l'utilisateur que si les aliments ne sont pas déjà chargés dans le panier (4), ceux-ci devraient être placés dans le panier (4) en préparation de l'abaissement imminent du panier (4) dans le milieu de cuisson (3), ledit signal de charge entraînant la génération par le au moins un générateur de signal (9, 10) d'un signal perceptible par les êtres humains avant la génération dudit signal d'immersion, et
- pour réaliser la génération du signal d'immersion avant la désactivation de l'élément de chauffage à la suite du signal de charge.

2. Friteuse selon la revendication 1, dans laquelle le système de commande (11) est adapté pour générer le signal de charge, entraînant la génération par le au moins un générateur de signal (9, 10) d'un signal perceptible par les êtres humains en réponse à une première occurrence du signal de température provenant du circuit du capteur de température représentant une température détectée prédéterminée inférieure à une valeur limite supérieure après l'allumage de la friteuse ou après le chauffage du milieu de cuisson (3) à partir d'une température inférieure à une température de friture la plus basse possible.

3. Friteuse selon les revendications 1 ou 2, comprenant également une interface utilisateur (16) raccordée opérationnellement au système de commande (11) pour fixer une condition d'amplification dans laquelle ladite valeur limite supérieure de la température détectée et ladite température détectée prédéterminée inférieure à ladite valeur limite supérieure sont temporairement augmentées.

4. Friteuse selon la revendication 3, dans laquelle ledit système de commande (11) est adapté pour déterminer ladite valeur supérieure temporairement accrue de la température détectée en ajoutant une augmentation prédéterminée à ladite valeur limite supérieure de la température détectée.

5. Friteuse selon la revendication 4, dans laquelle le système de commande (11) est adapté pour mettre fin à la condition d'amplification en réponse à un signal de température représentant ladite valeur limite supérieure accrue.

6. Friteuse selon l'une quelconque des revendications 3 à 5, dans laquelle le système de commande (11) est adapté pour mettre fin à la condition d'amplification en réponse à l'expiration d'une durée prédéterminée après le début de la condition d'amplification.

7. Friteuse selon l'une quelconque des revendications précédentes, dans laquelle le au moins un générateur de signal (9, 10) est adapté pour générer un signal perceptible par les êtres humains en réponse au signal d'immersion provenant du système de commande.

8. Friteuse selon l'une quelconque des revendications 1 à 6, comprenant également un dispositif de levage de panier (5) pour abaisser le panier (4) dans le milieu de cuisson (3) dans le bac de friture (1) et soulever le panier (4) hors du milieu de cuisson (3), et adapté pour abaisser le panier (4) dans le milieu de cuisson (3) en réponse au signal d'immersion.
